# DEMANDE DE BREVET EUROPEEN

(11) **EP 1 348 496 A1**
(43) Date de publication de la demande: **01.10.2003**
(21) Numéro de dépôt: 03290609.1
(22) Date de dépôt: 12.03.2003
(51) Int. Cl.: B08B 9/032

(54) **Procédé et appareil pour dépolluer les circuits hydrauliques d'un moule**

(30) Priorité: 26.03.2002 FR 0203734
(71) Demandeur: Hydraulique Production Systems, 95300 Ennery (FR)
(72) Inventeur: Rodrigues Da Costa, José, 95300 Pontoise (FR)
(74) Mandataire: Le Bras, Hervé

(57) **Abrégé**

L'invention concerne un procédé et appareil pour dépolluer un conduit, et notamment pour éliminer des copeaux résiduels dans un conduit (2) ménagé dans une partie (3) d'un moule.

Selon le procédé de l'invention, on inverse le sens de circulation du liquide dans le conduit à dépolluer selon des cycles de durée déterminée et on crée par intermittence au cours de chaque cycle des surpressions dans le liquide alimentant le conduit à dépolluer (2).

L'appareil comporte une électrovanne (30) pour inverser le sens de circulation dans des portions (22a,26a) de conduit de délivrance et de conduit de retour. Ces portions de conduit sont reliées à une dérivation de retour (22c,26c) et à des moyens (40a,40b) pour générer des surpressions, ces moyens comportant une pompe (41a,41b), un accumulateur hydropneumatique (45a,45b).

Des vannes à deux voies, deux positions (22d,26d,48a,48b) sont prévues dans les dérivations (22c,26c) et les moyens de génération de surpression.

## Description

L'invention concerne un procédé et un appareil pour dépolluer un conduit et notamment pour éliminer les copeaux résiduels dans un conduit ménagé dans une partie d'un moule.

Les moules utilisés pour la fabrication par injection de pièces de grandes dimensions en matière plastique, telles que les tableaux de bord de véhicules, sont réalisées en plusieurs parties qui doivent supporter des efforts considérables lors de l'injection de la pièce. Ces parties de moule sont réalisées en métal et ont des parois épaisses pour éviter les déformations lors de l'injection. Les ouvertures et fermetures du moule sont réalisées au moyen de vérins hydrauliques qui doivent supporter en outre des charges considérables au cours de l'injection afin d'éviter la désolidarisation des pièces lors de l'injection.

Du fait que les parois des parties de moule sont épaisses, il est d'usage de percer des conduits dans ces parois pour alimenter en huile les chambres des vérins hydrauliques associés à chaque partie du moule.

Ces conduits sont réalisés par forage, et ils peuvent contenir à la fin des opérations de forage des copeaux résiduels ou des barbes métalliques accrochées aux parois du conduit.

Lors de l'utilisation ultérieure du moule du fait des charges considérablement en jeu et des chocs hydrauliques inévitables, ces barbes peuvent se décrocher des parois des conduits, et être entraînées par la suite par l'huile du vérin hydraulique.

Ces copeaux peuvent créer des rayures sur les parois du cylindre du vérin, préjudiciables à la bonne étanchéité entre les deux chambres de vérin, voire provoquer un blocage du piston de vérin dans son cylindre. Il en résulte un disfonctionnement dans l'installation de moulage, qui nécessite une réparation longue et coûteuse.

On voit donc l'intérêt de disposer d'un procédé et d'un appareil pour éliminer les copeaux résiduels dans un conduit ménagé dans une partie de moule après son alésage.

WO 88/03065 décrit un appareil pour nettoyer un conduit de grande longueur. Cet appareil permet d'injecter successivement dans le conduit à nettoyer des volumes d'huile et des volumes de gaz, puis on ferme le circuit, on comprime l'ensemble à une pression de 35 bars et on crée des turbulences dans le conduit à nettoyer par détente des volumes de gaz en ouvrant le circuit. Ce document enseigne en outre qu'il était déjà connu de dépolluer un conduit en y faisant circuler un flux liquide en régime turbulent.

US 6 213 133 décrit un procédé et un appareil pour dépolluer un conduit. Ce document enseigne que l'on inverse la circulation du liquide de temps en temps, et que l'on injecte de l'air comprimé dans le circuit à des intervalles de temps prédéterminés pour créer des turbulences. Mais ce document n'enseigne pas que le liquide circule, en permanence, en régime turbulent dans le circuit. En effet, l'injection d'un débit d'air comprimé dans le circuit permet d'augmenter momentanément la vitesse de circulation du liquide par suite de la détente de l'air, ce qui crée des turbulences passagères, mais ne génère pas des surpressions significatives dans le circuit.

L'invention concerne donc un procédé pour dépolluer un conduit, et notamment pour éliminer les copeaux résiduels dans un conduit ménagé dans une partie d'un moule, procédé selon lequel on fait circuler un liquide en régime turbulent dans ledit conduit.

Le procédé selon l'invention est caractérisé par le fait que l'on inverse le sens de circulation du liquide dans le conduit à dépolluer selon des cycles de durée déterminée et on crée par intermittence au cours de chaque cycle des surpressions dans le liquide alimentant ledit conduit à dépolluer.

Ces surpressions créent des secousses qui permettent de décrocher les copeaux ou barbes dans le conduit.

Avantageusement, la pression normale du liquide alimentant ledit conduit est au moins égale à 30 bars et au plus égale à 50 bars.

La surpression du liquide est au moins égale à deux fois la pression normale et au plus égale à cinq fois la pression normale.

De préférence, on crée une surpression au moins une fois par cycle.

Le débit du liquide est calculé pour que la vitesse du liquide dans le conduit à dépolluer soit au moins égale à 9 m/s.

L'invention concerne également un appareil pour la mise en oeuvre du procédé, ledit appareil comportant un circuit hydraulique ouvert dont les bouches d'entrée et de sortie de fluide sont susceptibles d'être raccordées aux extrémités du conduit à dépolluer par des moyens de raccordement afin de former un circuit hydraulique fermé.

L'appareil selon l'invention est caractérisé par le fait que ledit circuit hydraulique ouvert comporte :
un réservoir de liquide, un conduit de délivrance de liquide dans lequel est disposée une première pompe entraînée par un moteur afin d'aspirer du liquide dans ledit réservoir et de le délivrer sous une pression et à un débit tels que le liquide délivré puisse circuler dans le conduit à dépolluer sous un régime turbulent, un conduit de retour de liquide vers le réservoir, une électrovanne à quatre voies et trois positions disposée dans le conduit de délivrance et le conduit de retour, ladite électrovanne permettant dans la position médiane d'arrêter la délivrance de fluide vers le conduit à dépolluer, le débit délivré par la première pompe retournant alors vers le réservoir, et permettant dans ses deux autres positions de délivrer du fluide au conduit à dépolluer respectivement dans des sens opposés,
par le fait que chacune des portions des conduits de délivrance et de retour interposées entre ladite électrovanne à quatre voies et les moyens de raccordement correspondants est reliée d'une part au réservoir par un conduit de dérivation équipé d'une première vanne à deux voies deux positions et, d'autre part, à des moyens pour générer dans le liquide délivré vers le conduit à dépolluer des surpressions intermittentes, lesdits moyens comprenant une deuxième pompe à haute pression aspirant du liquide dans le réservoir, un accumulateur hydropneumatique alimenté par ladite deuxième pompe et une deuxième vanne à deux voies, deux positions, disposée en aval dudit accumulateur, et
par le fait qu'il est prévu des moyens de commande et de synchronisme de ladite électrovanne et desdites première et deuxième vannes.

Les nombreuses dispositions suivantes sont en outre adoptées :
- la première pompe est une pompe à double corps, l'un des corps alimentant un circuit de refroidissement du liquide ;
- le réservoir comporte trois compartiments, un premier compartiment pour l'alimentation des pompes, un deuxième compartiment de décantation communiquant avec le premier compartiment, et un troisième compartiment, communiquant avec le deuxième compartiment et alimenté en liquide par les conduits de dérivation ;
- le deuxième compartiment est équipé de barreaux magnétiques ;
- les conduits de dérivation comportent un filtre à tamis ;
- les portions des conduits de délivrance et de retour sont équipées de clapet anti-retour au voisinage de l'électrovanne ; et
- il est prévu un clapet anti-retour en aval de chaque pompe.

D'autres avantages et caractéristiques de l'invention ressortiront à la lecture de la description suivante faite à titre d'exemple et en référence aux dessins annexés dans lesquels :
- la figure 1 montre le schéma hydraulique de l'appareil de dépollution d'un conduit d'une partie de moule, selon l'invention ;
- la figure 2 montre le schéma du circuit pneumatique de commande des vannes à deux voies de l'appareil selon l'invention ; et
- la figure 3 montre en fonction du temps, la courbe de la pression régnant dans le conduit à dépolluer et la disposition de l'électrovanne à quatre voies, trois positions, et des quatre vannes à deux positions.

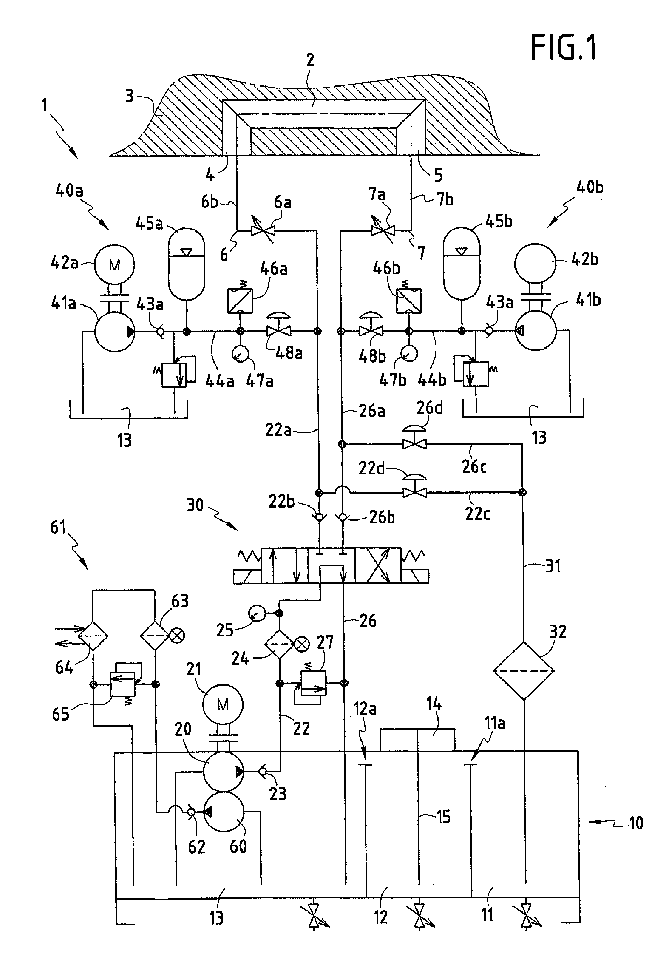

Sur la figure 1, on a représenté par la référence 1 un appareil destiné à dépolluer un conduit 2 ménagé dans une partie 3 d'un moule et qui débouche sur une face de la partie 3 par un orifice d'entrée 4 et un orifice de sortie 5.

L'appareil 1 comporte une bouche de sortie 6 et une bouche d'entrée 7, équipées de vannes d'arrêt à commande manuelle, respectivement 6a et 7a susceptibles d'être raccordées aux orifices d'entrée 4 et de sortie 5 du conduit 2 à dépolluer par des moyens de raccordement référencés 6b et 7b, afin de former, lors du fonctionnement de l'appareil, un circuit hydraulique fermé.

Le circuit hydraulique de l'appareil 1 comporte un réservoir d'huile 10 constitué de trois compartiments 11, 12, 13, à savoir un premier compartiment 11 recevant l'huile ayant circulé dans le conduit à dépolluer 2, un compartiment intermédiaire 12 de décantation communiquant avec le premier compartiment 11 et équipé de barreaux magnétiques 14, et un troisième compartiment 13 recevant le trop-plein du compartiment intermédiaire 12.

Une première pompe 20, entraînée par un moteur 21, aspire de l'huile dans le compartiment 13, et le délivre à une pression de 30 bars environ, dans un conduit de délivrance 22 interposé entre la pompe 20 et une électrovanne 30 à quatre voies, et trois positions. Ce conduit de délivrance 22 est équipé d'un clapet anti-retour 23, d'un filtre 24 à basse pression ayant un indicateur de colmatage visuel et d'un manomètre à bain de glycérine 25.

Dans la position médiane de l'électrovanne 30, ainsi que cela est montré sur la figure 1, l'électrovanne 30 retourne l'huile délivrée par le conduit de délivrance 22 vers le compartiment 13 du réservoir 10 par un conduit de retour 26. Une vanne limitatrice de pression 27 réglable est interposée entre le conduit de délivrance 22 et le conduit de retour 26.

Lorsque l'électrovanne 30 est déplacée vers la droite, sur la figure 1, le conduit de délivrance 22 communique avec une portion de conduit de délivrance 22a disposée entre l'électrovanne 30 et la vanne d'arrêt 6a, et le conduit de retour 26 communique avec une portion de conduit de retour 26a disposée entre l'électrovanne 30 et la vanne d'arrêt 6b.

Inversement lorsque l'électrovanne 30 est déplacée vers la gauche, sur la figure 1, le conduit de délivrance 22 est en communication avec la portion de conduit de retour 26a et le conduit de retour 26 est en communication avec la portion de conduit de délivrance 22a.

On conçoit ainsi que le déplacement de l'électrovanne 30 d'une position extrême, gauche ou droite, vers l'autre position extrême, droite ou gauche, entraîne le renversement du sens de l'alimentation en huile sous pression dans le conduit à dépolluer 2.

Comme on le voit sur la figure 1, les portions de conduit 22a et 26a sont équipées au voisinage de l'électrovanne 30 de clapets anti-retour, référencés respectivement 22b, 26b, qui permettent la circulation de l'huile de l'électrovanne 30 vers le conduit à dépolluer 2, mais empêchent la circulation de l'huile issue du conduit à dépolluer 2 vers l'électrovanne 30, et par le fait même vers le troisième compartiment 13 via la conduit de retour 26.

Les portions de conduit 22a et 26a sont raccordées, entre les clapets anti-retour 22b et 26b et les vannes d'arrêt 6a et 7b, au premier compartiment 11 du réservoir 10 par des dérivations 22c et 26c raccordées à une dérivation commune 31.

Un filtre à tamis 32 est installé dans la dérivation commune 31, et les conduits de dérivation 22c et 26c sont équipés de vannes à deux voies à commande pneumatique, référencées respectivement 22d et 26d, qui peuvent prendre deux positions, soit ouverte, soit fermée.

Lorsque l'électrovanne 30 est déplacée vers la droite sur la figure 1, la vanne 22d est dans la position fermée et la vanne 26d est dans la position ouverte. Dans cette configuration et en fonctionnement, l'huile délivrée par la pompe 20 pénètre dans le conduit 2, via la portion de conduit 22b, et retourne vers le premier compartiment 11 du réservoir 10 via la portion de conduit 26a, la dérivation 26c, la dérivation commune 31, et le filtre à tamis 32.

Le trop-plein du premier compartiment 11 s'écoule vers le deuxième compartiment 12 du réservoir 10 par un passage 11a. Dans le deuxième compartiment 12, les particules métalliques éventuellement présentes dans l'huile sont retenues par une plaque 15 associée aux barreaux magnétiques 14 et le trop-plein du deuxième compartiment 12 se déverse dans le troisième compartiment 13 par un passage 12a.

L'appareil 1 tel que décrit ci-dessus permet d'inverser le sens de circulation de l'huile dans le conduit à dépolluer 2 en commandant le déplacement de l'électrovanne 30 et la fermeture/ouverture simultanée des vannes 22d et 26d après une durée prédéterminée dans un cycle, afin d'obtenir une dépollution du conduit 2, après un nombre suffisant de cycles.

Afin d'améliorer de façon notable la dépollution du conduit 2 de la partie de moule 3, les portions de conduit 22a et 26a sont reliées à des moyens, référencés respectivement 40a, 40b pour générer par intermittence des surpressions dans l'huile délivrée dans le conduit à dépolluer 2 à chaque cycle de traitement.

Ces moyens 40a, 40b comportent chacun une pompe à haute pression 41a, 41b entraînée par un moteur 42a, 42b et aspirant de l'huile dans le compartiment 13 du réservoir 10, un clapet anti-retour 43a, 43b disposé dans le conduit 44a, 44b de raccordement à la portion de conduit correspondante 22a ou 26a, immédiatement en aval de la pompe 41a, 41b, un accumulateur hydropneumatique 45a, 45b, un pressostat 46a, 46b à deux seuils réglables 50 bars et 150 bars, un manomètre 47a, 47b à bain de glycérine et une vanne à deux voies à commande pneumatique 48a, 48b qui peut prendre une position ouverte ou une position fermée. Une vanne limitatrice de pression 49a, 49b est interposée entre le conduit 44a, 44b et le compartiment 13 du réservoir 10.

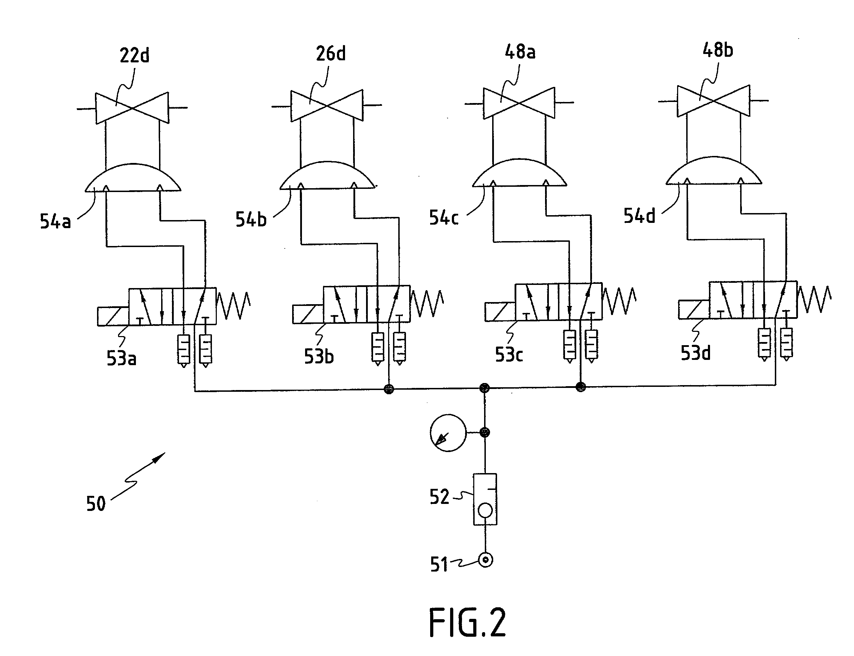

La figure 2 montre le circuit pneumatique 50 utilisé pour la commande des vannes 22d, 26d, 48a et 48b. Ce circuit 50 comporte une source 51 d'air sous pression à 6 bars, un filtre régulateur et lubrificateur 52, et quatre électrovannes 53a, 53b, 53c et 53d à cinq voies, deux positions, actionnant chacune un organe de commande 54a, 54b, 54c et 54d de l'une desdites vannes.

L'appareil 1 comporte en outre des moyens de commande et de synchronisme de l'électrovanne 30 et des électrovannes 53a, 53b, 53c, 53d qui commandent l'ouverture ou la fermeture des vannes 22d, 26d, 48a et 48b.

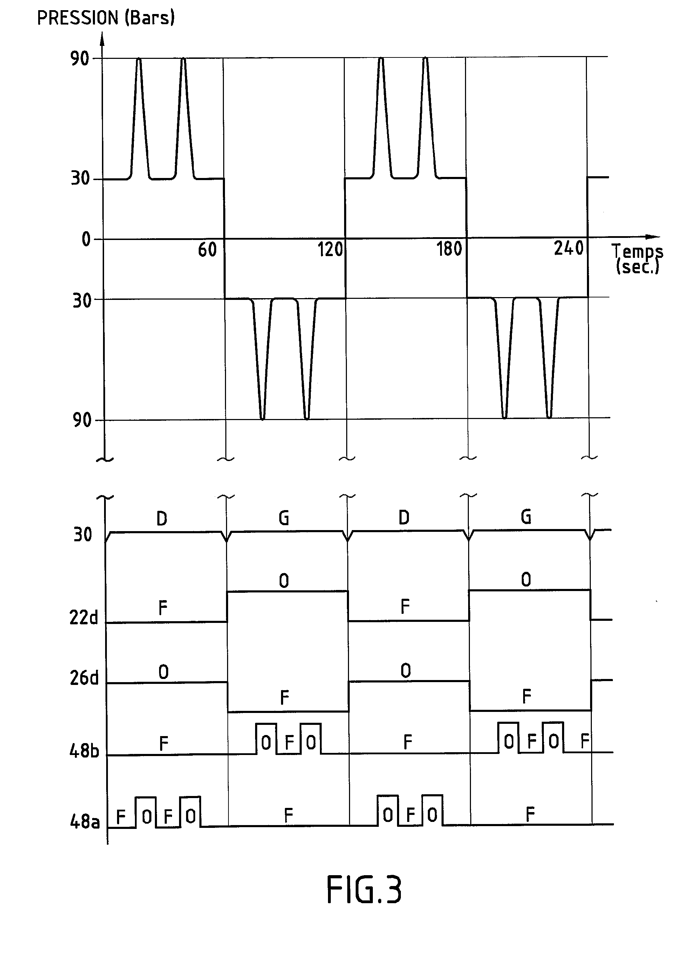

Sur le schéma de la figure 3, on a représenté par la lettre F la position de fermeture des vannes 22d, 26d, 48a et 48b en fonction du temps et par la lettre O, leur position d'ouverture.

Sur ce même schéma, on a représenté par la lettre D le positionnement à droite de l'électrovanne 30, et par la lettre G son positionnement à gauche en fonction du temps.

Au cours des 60 premières secondes d'un cycle, l'électrovanne 30 est positionnée à droite sur la figure 1. La portion de conduit 22a est alimentée en huile sous une pression de 30 bars. La vanne 22d est fermée, et la vanne 26d est ouverte. L'huile circulant dans le conduit à dépolluer 2 retourne vers le compartiment 11 du réservoir 10. Pendant cette période, la vanne 48b reste fermée. Mais pendant cette même période, la vanne 48a est ouverte au moins 1 fois et de préférence 2 fois. L'accumulateur hydropneumatique 45a qui a été chargée sous une pression de 90 bars au moins, est alors reliée à la portion de conduit 22a, ce qui provoque une brusque surpression de l'huile dans le conduit à dépolluer 2.

Au cours des 60 secondes suivantes du même cycle, l'électrovanne 30 est positionnée à gauche, la vanne 22d est ouverte, la vanne 26d est fermée, la vanne 48a est fermée, et la vanne 48b est ouverte par intermittence. Le sens de circulation de l'huile dans le conduit à dépolluer 2 est inversé.

De préférence, au cours d'un cycle complet de 2 minutes, on crée des surpressions toutes les 30 secondes.

Ces surpressions, dont la valeur maximum est réglée par les pressostats 46a, 46b, sont au moins égales à deux fois la pression normale de l'huile, et au plus égales à cinq fois la pression normale, en fonction des résistances mécaniques du conduit à dépolluer 2. Ces surpressions créent des chocs hydrauliques qui permettent un décrochage des copeaux ou barbes résiduelles éventuellement accrochées aux parois internes du conduit 2.

Ainsi que cela est montré sur la figure 1, la pompe 20 alimentant le conduit de délivrance 22 est de préférence une pompe à double corps, dont le premier corps 60 prélève de l'huile dans le troisième compartiment 13 du réservoir 10 et le délivre vers un circuit de refroidissement 61 via un clapet anti-retour 62, un filtre basse pression 63 avec indicateur de colmatage visuel. Le circuit de refroidissement 61 comporte un échangeur eau-huile à plaques 64, une vanne thermostatique avec doigt de gant, et un limiteur de pression réglable 65.

A titre indicatif et non limitatif, le moteur 21 est un moteur électrique ayant une puissance de 7,5 kW à 1 500 tr/min. La pompe à double corps 20, 60 est du type à engrenages et délivre 30 l/min vers le circuit de refroidissement 61 et 70 l/min dans le conduit de délivrance 22 à une pression de 30 bars. Les moteurs 42a et 42b sont des moteurs électriques ayant une puissance de 1,5 kW à 1 500 tr/min. Les pompes 41a et 41b sont des pompes à engrenages, délivrant 6 l/min à une pression pouvant atteindre 150 bars. Les accumulateurs 45a et 45b sont du type à vessie et ont un volume de 10 litres.

## Revendications

1. Procédé pour dépolluer un conduit, et notamment pour éliminer des copeaux résiduels dans un conduit ménagé dans une partie d'un moule, procédé selon lequel on fait circuler un liquide en régime turbulent dans ledit conduit,
**caractérisé par le fait que** l'on inverse le sens de circulation du liquide dans le conduit à dépolluer (2) selon des cycles de durée déterminée et on crée par intermittence au cours de chaque cycle des surpressions dans le liquide alimentant ledit conduit à dépolluer.

2. Procédé selon la revendication 1, **caractérisé par le fait que** la pression normale du liquide alimentant ledit conduit est au moins égale à 30 bars et au plus égale à 50 bars.

3. Procédé selon la revendication 2, **caractérisé par le fait que** la surpression du liquide est au moins égale à 2 fois la pression normale et au plus égale à 5 fois la pression normale.

4. Procédé selon la revendication 3, **caractérisé par le fait qu'**on crée une surpression au moins une fois par demi-cycle.

5. Procédé selon l'une des revendications 1 à 4, **caractérisé par le fait que** le débit du liquide est calculé pour que la vitesse du liquide dans le conduit à dépolluer soit au moins égale à 9 m/s.

6. Appareil pour la mise en oeuvre du procédé selon l'une quelconque des revendications 1 à 5, ledit appareil comportant un circuit hydraulique ouvert dont les bouches d'entrée (7) et de sortie (6) de fluide sont susceptibles d'être raccordées aux extrémités (4, 5) du conduit à dépolluer (2) par des moyens de raccordement (6b, 7b) afin de former un circuit hydraulique fermé,
**caractérisé par le fait que** ledit circuit hydraulique ouvert comporte :
un réservoir de liquide (10),
un conduit de délivrance (22b) de liquide dans lequel est disposée une première pompe (20) entraînée par un moteur (21) afin d'aspirer du liquide dans ledit réservoir (10) et de le délivrer sous une pression et à un débit tels que le liquide délivré puisse circuler dans le conduit à dépolluer (2) sous un régime turbulent,
un conduit de retour (26) de liquide vers le réservoir (10),
une électrovanne (30) à quatre voies et trois positions disposée dans le conduit de délivrance (22) et le conduit de retour (26), ladite électrovanne (30) permettant dans la position médiane d'arrêter la délivrance de fluide vers le conduit à dépolluer (2), le débit délivré par la première pompe (20) retournant alors vers le réservoir (10) et permettant, dans ses deux autres positions, de délivrer du fluide au conduit à dépolluer (2) respectivement dans des sens opposés,
**par le fait que** chacune des portions des conduits de délivrances (22a) et de retour (26a) interposées entre ladite électrovanne (30) à quatre voies et les moyens de raccordement correspondants (6b, 7b) est reliée, d'une part, au réservoir (10) par un conduit de dérivation (22c, 26c, 31) équipé d'une première vanne (22d, 26d) à deux voies deux positions et, d'autre part, à des moyens (40a, 40b) pour générer dans le liquide délivré vers le conduit à dépolluer (2) des surpressions intermittentes, lesdits moyens comprenant une deuxième pompe à haute pression (41a, 41b) aspirant du liquide dans le réservoir (10), un accumulateur hydropneumatique (45a, 45b) alimenté par ladite deuxième pompe (41a, 41b) et une deuxième vanne (48a, 48b) à deux voies, deux positions, disposée en aval dudit accumulateur (45a, 45b), et
**par le fait qu'**il est prévu des moyens de commande et de synchronisme de ladite électrovanne (30) et desdites première et deuxième vannes (22d, 26d, 48a, 48b).

7. Appareil selon la revendication 6, **caractérisé par le fait que** la première pompe (20) est une pompe à double corps, l'un des corps (60) alimentant un circuit de refroidissement (61) du liquide.

8. Appareil selon l'une des revendications 6 ou 7, **caractérisé par le fait que** le réservoir (10) comporte trois compartiments (11, 12, 13), un premier compartiment (13) pour l'alimentation des pompes (20, 41a, 41b), un deuxième compartiment (12) de décantation communiquant avec le premier compartiment, et un troisième compartiment (11), communiquant avec le deuxième compartiment et alimenté en liquide par les conduits de dérivation (22c, 26c, 31).

9. Appareil selon la revendication 8, **caractérisé par le fait que** le deuxième compartiment (12) est équipé de barreaux magnétiques (14).

10. Appareil selon l'une des revendications 8 ou 9, **caractérisé par le fait que** les conduits de dérivation (22c, 26c, 31) comportent un filtre à tamis (32).

11. Appareil selon l'une des revendications 6 à 10, **caractérisé par le fait que** les portions des conduits de délivrance (22a) et de retour (26a) sont équipées de clapet anti-retour (22b, 26b) au voisinage de l'électrovanne (30).

12. Appareil selon l'une quelconque des revendications 6 à 11, **caractérisé par le fait qu'**il est prévu un clapet anti-retour (23, 43a, 43b) en aval de chaque pompe (20, 41a, 41b).
